# EUROPEAN PATENT SPECIFICATION

(11) **EP 4 080 720 B1**
(45) Date of publication and mention of the grant of the patent: **29.01.2025**
(21) Application number: 21917941.3
(22) Date of filing: 27.12.2021
(51) Int. Cl.: H02J 7/00, H01M 10/42

(54) **BATTERY DEVICE AND VOLTAGE SUPPLY METHOD**
BATTERIEVORRICHTUNG UND SPANNUNGSVERSORGUNGSVERFAHREN
DISPOSITIF DE BATTERIE ET PROCÉDÉ D'ALIMENTATION EN TENSION

(30) Priority: 08.01.2021 KR 20210002663
(43) Date of publication of application: 26.10.2022
(73) Proprietor: LG Energy Solution, Ltd., Seoul 07335 (KR)
(72) Inventor: LEE, Sungwoo, Daejeon 34122 (KR)
(74) Representative: Plasseraud IP
(86) International application number: PCT/KR2021/019911
(87) International publication number: WO 2022/149780

(56) References cited:
- JP-A- 2017 198 546
- JP-A- 2020 178 486
- KR-A- 20140 061 839
- KR-B1- 101 485 665
- US-A1- 2005 093 512
- US-A1- 2010 261 043
- US-A1- 2015 037 656
- US-B2- 10 562 474

## Description

### [Technical Field]

### CROSS-REFERENCE TO RELATED APPLICATION

This application claims priority to and the benefit of Korean Patent Application No. 10-2021-0002663 filed in the Korean Intellectual Property Office on January 8, 2021.

The described technology relates to a battery apparatus and a method of supplying a voltage.

### [Background Art]

An electric vehicle or a hybrid vehicle is a vehicle that obtains power by driving a motor mainly using a battery as a power supply. The electric vehicles are being actively researched because they are alternatives that can solve pollution and energy problems of internal combustion vehicles. Rechargeable batteries are used in various external apparatuses other than the electric vehicles.

The battery apparatus includes a battery pack and a battery management system for managing the battery pack. The battery management system monitors various information such as a voltage, a state of charge and a temperature of battery cells included in the battery and includes various circuits for monitoring the various information.

Currently, a power source for supplying power to electronic components is used to supply power to the battery management system. However, since a voltage (e.g., 12V) supplied from the power supply for supplying the power to the electronic components is higher than an operating voltage (e.g., 5V) of the battery management system, a component for lowering the voltage of the power supply is required. When the voltage is lowered in this way, electromagnetic interference (EMI) may occur in a DC/DC (direct current to direct current) converter, power consumption may increase due to a low dropout (LDO) regulator, and additional components may be required for voltage stabilization.

US2010/261043 A1 relates to a dynamically reconfigurable battery framework for management of a large-scale battery system.

US2005/093512 A1 relates to a system and method for effectively managing operating power for an electronic device that may include a battery pack coupled to the electronic device for supplying operating power to the electronic device.

US2015/037656 A1 relates to a storage battery control device that controls an assembly battery having a plurality of secondary battery cells connected to each other, including at least one integrated circuit adapted to monitor and control charging and discharging of each of the secondary battery cells of the assembly battery.

### [Disclosure]

### [Technical Problem]

Some embodiments may provide a battery apparatus and a method of supplying a voltage capable of supplying an operating voltage of a battery management system without using a component for voltage drop.

### [Technical Solution]

According to an aspect, a battery apparatus according to claim 1 is provided.

In some embodiments, a voltage of the first battery pack may not be provided as the operating voltage.

In some embodiments, the operating voltage may correspond to a sum of voltages of the predetermined number of battery cells.

In some embodiments, a wire connected to a negative electrode of a first battery cell among the predetermined number of battery cells may be connected to a ground terminal of the operating device, and a wire connected to a positive electrode of a last battery cell among the predetermined number of battery cells may be connected to an operating voltage supply terminal of the operating device.

In some embodiments, the plurality of battery cells of the second battery pack may be grouped into a plurality of battery cell groups, and each of the plurality of battery cell groups may include battery cells corresponding to the predetermined number. The battery management system may select the battery cell group from among the plurality of battery cell groups.

In some embodiments, the battery management system may alternately select one battery cell group from among the plurality of battery cell groups at a predetermined time interval.

In some embodiments, the battery management system may further include a switching circuit configured to select the plurality of battery cell groups.

In some embodiments, the plurality of battery cell groups may include a first battery cell group and a second battery cell group. In response to selecting the first battery cell group, the switching circuit may connect a first wire connected to a negative electrode of a first battery cell among the predetermined number of battery cells in the first battery cell group to a ground terminal of the operating device, and connect a second wire connected to a positive electrode of a last battery cell among the predetermined number of battery cells in the first battery cell group to an operating voltage supply terminal of the operating device. In response to selecting the second battery cell group, the switching circuit may connect a third wire connected to a negative electrode of a first battery cell among the predetermined number of battery cells in the second battery cell group to the ground terminal, and connect a fourth wire connected to a positive electrode of a last battery cell among the predetermined number of battery cells in the second battery cell group to the operating voltage supply terminal.

In some embodiments, the switching circuit may include a first switch connected between the first wire and the ground terminal, a second switch connected between the second wire and the operating voltage supply terminal, a third switch connected between the third wire and the ground terminal, and a fourth switch connected between the fourth wire and the operating voltage supply terminal. The battery management system may select the first battery cell group by turning on the first switch and the second switch, and may select the second battery cell group by turning on the third switch and the fourth switch.

In some embodiments, the operating device may include a processor.

According to another aspect, a method according to claim 11 is provided.

According to an example useful for understanding of the disclosure, a battery apparatus including a battery pack including a plurality of battery cells and a battery management system may be provided. The battery management system may group the plurality of battery cells of the battery pack into a plurality of battery cell groups each including a predetermined number of battery cells, alternately select one battery cell group from among the plurality of battery cell groups, and providing an operating voltage to an operating device of the battery management system through the selected battery cell group.

### [Advantageous Effects]

According to some embodiments, it is possible to supply the operating voltage of the battery management system without using a component for lowering the voltage of the power supply.

### [Description of the Drawings]

FIG. 1 is a diagram showing a battery apparatus according to an embodiment.
FIG. 2 is a diagram for explaining supply of an operating voltage of a battery management system according to an embodiment.
FIG. 3 and FIG. 4 are diagrams for explaining supply of an operating voltage of a battery management system according to another embodiment.
FIG. 5 is a diagram showing an example of a switching circuit shown in FIG. 3.
FIG. 6 is a flowchart showing a voltage supply method according to another embodiment.

### [Mode for Invention]

In the following detailed description, only certain embodiments have been shown and described, simply by way of illustration. As those skilled in the art would realize, the described embodiments may be modified in various different ways, all without departing from the scope of the present invention as specified by the appended claims. Accordingly, the drawings and description are to be regarded as illustrative in nature and not restrictive. Like reference numerals designate like elements throughout the specification.

When it is described that an element is "connected" to another element, it should be understood that the element may be directly connected to the other element or connected to the other element through a third element. On the other hand, when it is described that an element is "directly connected" to another element, it should be understood that the element is connected to the other element through no third element.

As used herein, a singular form may be intended to include a plural form as well, unless the explicit expression such as "one" or "single" is used.

In flowcharts described with reference to the drawings, the order of operations or steps may be changed, several operations or steps may be merged, a certain operation or step may be divided, and a specific operation or step may not be performed.

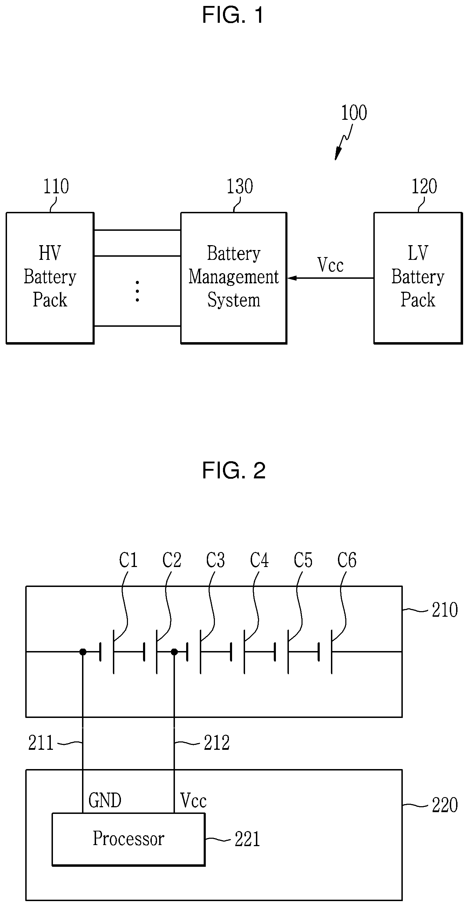

FIG. 1 is a diagram showing a battery apparatus according to an embodiment.

Referring to FIG. 1, a battery apparatus 100 includes a high voltage (HV) battery pack 110, a low voltage (LV) battery pack 120, and a battery management system (BMS) 130.

The battery apparatus 100 has a structure that can be electrically connected to an external apparatus. When the external apparatus is a load, the battery apparatus 100 is discharged by operating as a power supply that supplies power to the load. The external apparatus 10 operating as the load may be, for example, an electronic device, a mobility apparatus, or an energy storage system (ESS). The mobility apparatus may be, for example, a vehicle such as an electric vehicle, a hybrid vehicle, or a smart mobility.

The HV battery pack 110 outputs a relatively high voltage and supplies power to a large-capacity load of the external apparatus. The LV battery pack 120 outputs a relatively low voltage and supplies power to a low-capacity load of the external apparatus. The voltage supplied from the HV battery pack 110 is higher than the voltage supplied from the LV battery pack 120. In some embodiments, the large-capacity load may be a load for driving the vehicle, including, for example, a motor of the vehicle. In some embodiments, the low-capacity load of the external apparatus may be a load used to control the vehicle, for example, an electrical component.

The HV battery pack 110 and the LV battery pack 120 each include a plurality of battery cells (not shown). In some embodiments, the battery cell may be a rechargeable cell. Each battery pack 110 or 120 may include a battery module in which a predetermined number of battery cells are connected in series. In some embodiments, in each battery pack 110 or 120, a predetermined number of battery modules may be connected in series or in parallel to supply desired power.

The HV battery pack 110 is connected to the battery management system 130 through wires (not shown). For example, each of the plurality of battery cells of the HV battery pack 110 may be connected to the battery management system 130 through the wire. The battery management system 130 may include a processor 131. The processor 131 may collect and analyze various information about the battery cells to control charging and discharging of the battery cells, a cell balancing operation, a protection operation, and the like. In some embodiments, the processor 131 may be, for example, a micro controller unit (MCU). In some embodiments, the battery management system 130 may further include various monitoring circuits (not shown) such as cell voltage monitoring circuits.

In some embodiments, the battery management system 130 may collect and analyze various information about the battery cells of the LV battery pack 120 to control charging and discharging of the battery cells, a cell balancing operation, a protection operation, and the like.

In some embodiments, the battery apparatus 110 may further include a separate battery management system (not shown) for the LV battery pack 120.

An operating device of the battery management system 130, for example, the processor 131 of the battery management system 130 may be operated by receiving an operating voltage. To this end, some battery cells of the LV battery pack 120 may supply the operating voltage Vcc for the battery management system 130. Accordingly, a DC/DC converter for lowering the voltage of the power supply, an LDO regulator, and components for voltage stabilization may not be used. In some embodiments, the voltage of the HV battery pack 110 may be not provided as the operating voltage Vcc, and only the LV battery pack 120 may supply the operating voltage Vcc. Accordingly, the power supplied to the large-capacity load may not be affected by the supply of the operating voltage Vcc.

FIG. 2 is a diagram for explaining supply of an operating voltage of a battery management system according to an embodiment.

Referring to FIG. 2, an LV battery pack 210 includes a plurality of battery cells connected in series. Although six battery cells C1, C2, C3, C4, C5, and C6 are shown in FIG. 2 for convenience of description, the number of battery cells included in the LV battery pack is not limited thereto.

Among the plurality of battery cells of the LV battery pack 210, some adjacent battery cells C1 and C2 form one battery cell group to supply an operating voltage to a battery management system 220. For example, when a voltage of each battery cell of the LV battery pack 210 is 2.5V and the operating voltage of the battery management system 220 is 5V, the two battery cells C1 and C2 may supply the operating voltage.

In the battery cell group, wires 211 and 212 are connected to a negative electrode of the first battery cell C1 and a positive electrode of the last battery cell C2, respectively. The wire 211 is connected to a terminal corresponding to a ground potential of the battery management system 220, and the wire 212 is connected to a terminal for supplying the operating voltage of the battery management system 220. In some embodiments, as shown in FIG. 2, the wire 211 may connected to the ground terminal of the processor 221 of the battery management system 220, i.e., a ground pin GND, and the wire 212 may be connected to an operating voltage supply terminal of the processor 221, i.e., an operating voltage supply pin Vcc.

Accordingly, a sum (e.g., 5V) of voltages of the battery cells C1 and C2 included in the battery cell group may be supplied as the operating voltage of the battery management system 220.

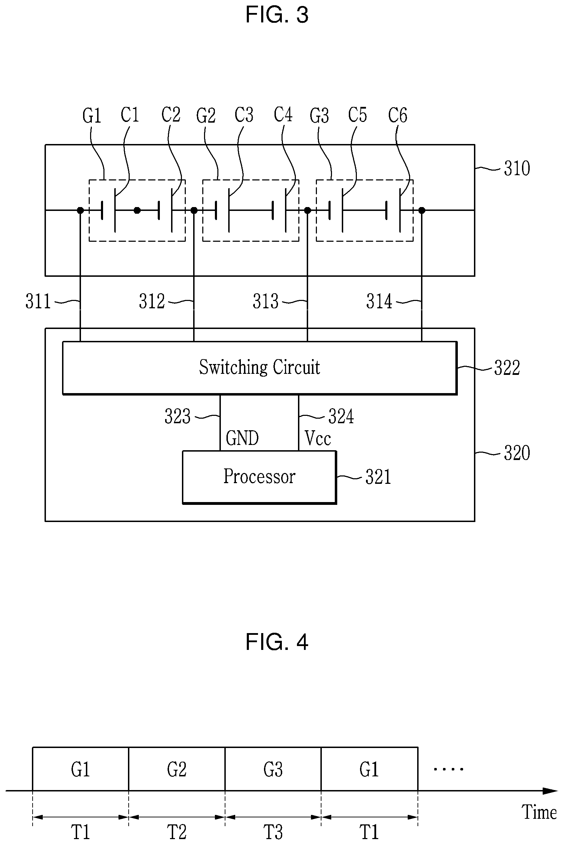

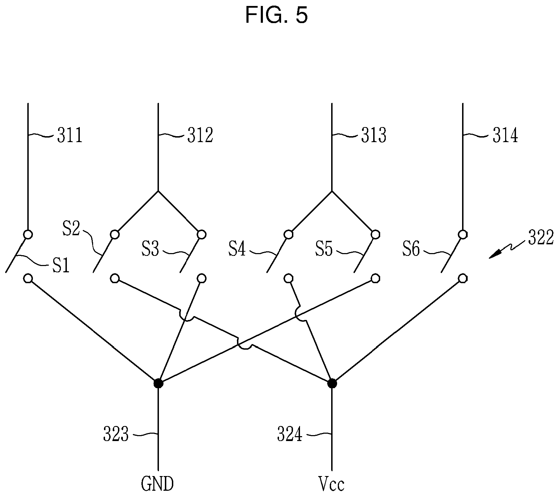

FIG. 3 and FIG. 4 are diagrams for explaining supply of an operating voltage of a battery management system according to another embodiment, and FIG. 5 is a diagram showing an example of a switching circuit shown in FIG. 3.

Referring to FIG. 3, an LV battery pack 310 includes a plurality of battery cells connected in series. Although six battery cells C1, C2, C3, C4, C5, and C6 are shown in FIG. 3 for convenience of description, the number of battery cells included in the LV battery pack is not limited thereto.

A plurality of battery cells of the LV battery pack 310 are grouped into a plurality of battery cell groups G1, G2, and G3, and each battery cell group Gi includes battery cells that can supply a voltage corresponding to the operating voltage of the battery management system 320. Here, i is an integer from 1 to 3. For example, when a voltage of each battery cell of the LV battery pack 210 is 2.5V and the operating voltage of the battery management system 320 is 5V, each battery cell group Gi may include two adjacent battery cells. That is, one battery cell group G1 may include two battery cells C1 and C2, another battery cell group G2 may include two other battery cells C3 and C4, and yet another battery cell group G3 may include two other battery cells C5 and C6.

In the battery cell group G1, wires 311 and 312 are connected to a negative electrode of the first battery cell C1 and a positive electrode of the last battery cell C2, respectively. In the battery cell group G2, wires 312 and 313 are connected to a negative electrode of the first battery cell C3 and a positive electrode of the last battery cell C4, respectively. In this case, since the positive electrode of the last battery cell C2 of the battery cell group G1 and the negative electrode of the first battery cell C3 of the battery cell group G2 are shared, the same wire 312 is connected to the positive electrode of the battery cell C2 and the negative electrode of the battery cell C3. In some embodiments, a separate wire other than the wire 312 may be connected to the negative electrode of the first battery cell C3 of the battery cell group G2. Similarly, in the battery cell group G3, wires 313 and 314 are connected to a negative electrode of the first battery cell C5 and a positive electrode of the last battery cell C6, respectively. In this case, since the positive electrode of the last battery cell C4 of the battery cell group G2 and the negative electrode of the first battery cell C5 of the battery cell group G3 are shared, the same wire 313 is connected to the positive electrode of the battery cell C4 and the negative electrode of the battery cell C5. In some embodiments, a separate wire other than the wire 313 may be connected to the negative electrode of the first battery cell C5 of the battery cell group G3.

The battery management system 320 includes a switching circuit 322. The switching circuit 322 is connected to the wires 311, 312, 313, and 314, and has a negative output terminal 323 and a positive output terminal 324. The negative output terminal 323 is connected to a ground terminal of an operating device of the battery management system 320, and the positive output terminal 324 is connected to an operating voltage supply terminal of the operating device of the battery management system 320. In some embodiments, as shown in FIG. 3, the negative output terminal 323 may be connected to a ground terminal of a processor 321 of the battery management system 320, i.e., a ground pin GND, and the positive output terminal 324 may be connected to an operating voltage supply terminal of the processor 321, i.e., an operating voltage supply pin Vcc.

The switching circuit 322 periodically switches connections among the wires 311, 312, 313, and 314, the negative output terminal 323, and the positive output terminal 324. In some embodiments, as shown in FIG. 4, the switching circuit 322 may connect the wire 311 to the negative output terminal 323 and the wire 312 to the positive output terminal 324 during a first period T1 so that the battery cell group G1 can supply the operating voltage. After the first period T1, the switching circuit 322 may connect the wire 312 to the negative output terminal 323 and the wire 313 to the positive output terminal 324 during a second period T2 so that the battery cell group G2 can supply the operating voltage. After the second period T2, the switching circuit 322 may connect the wire 313 to the negative output terminal 323 and the wire 314 to the positive output terminal 324 during a third period T3 so that the battery cell group G3 can supply the operating voltage. The switching circuit 322 may alternately select the plurality of battery cell groups G1, G2, and G3 and supply the operating voltage by repeating the first period T1, the second period T2, and the third period T3. Accordingly, it is possible to prevent an imbalance in battery cell voltage that may occur when the operating voltage is supplied only from a specific battery cell group.

In some embodiments, the switching circuit 322 may allow two battery cell groups to simultaneously supply the operating voltage when switching to another period. Accordingly, it is possible to ensure that there is no blank period in the supply of the operating voltage.

In some embodiments, durations of the first period T1, the second period T2, and the third period T3 may be set to be the same.

In some embodiments, the processor 321 of the battery management system 320 may control operations of the switching circuit 322.

In some embodiments, as shown in FIG. 5, the switching circuit 322 may include a plurality of switches S1, S2, S3, S4, S5, and S6. The switch S1 is connected between the wire 311 and the negative output terminal 323, and the switch S2 is connected between the wire 312 and the positive output terminal 324. The switch S3 is connected between the wire 312 and the negative output terminal 323, and the switch S4 is connected between the wire 313 and the positive output terminal 324. The switch S5 is connected between the wire 313 and the negative output terminal 323, and the switch S6 is connected between the wire 314 and the positive output terminal 324. Accordingly, the battery management system may turn on the switches S1 and S2 to select the battery cell group G1, turn on the switches S3 and S4 to select the battery cell group G2, and turn on the switches S5 and S6 to select the battery cell group G3.

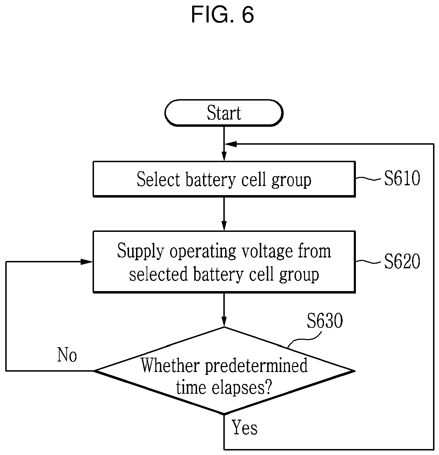

FIG. 6 is a flowchart showing a voltage supply method according to another embodiment.

Referring to FIG. 6, a battery management system selects one battery cell group from among a plurality of battery cells of an LV battery pack at S610. The selected battery cell group supplies an operating voltage to an operating device of the battery management system at S620.

If a predetermined time has not elapsed after selecting one battery cell group at S630, the operating voltage is continuously supplied from the selected battery cell group at S620. When a predetermined time has elapsed after selecting one battery cell group, the battery management system selects another battery cell group from the LV battery pack at S610. Accordingly, the newly selected battery cell group may supply the operating voltage to the operating device of the battery management system at S620.

By repeating the processes of S610, S620, and S630, the battery management system may supply the operating voltage to the operating device of the battery management system while balancing battery cell voltages.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

## Claims

1. A battery apparatus (100) comprising:
a first battery pack (110) configured to provide a first voltage to a large-capacity load of an external apparatus configured to be connected to the battery apparatus (100);
a battery management system (130) configured to manage the first battery pack (110); and
a second battery pack (120, 210, 310) configured to provide a second voltage lower than the first voltage to a low-capacity load of the external apparatus, and including a plurality of battery cells,
wherein the battery management system (130) is configured to select a battery cell group including a predetermined number of battery cells from among the plurality of battery cells of the second battery pack (120, 210, 310), and
wherein the selected battery cell group supplies an operating voltage to an operating device of the battery management system.

2. The battery apparatus (100) of claim 1, wherein only a voltage of the second battery pack (120, 210, 310) is provided as the operating voltage.

3. The battery apparatus (100) of claim 1, wherein the operating voltage corresponds to a sum of voltages of the predetermined number of battery cells.

4. The battery apparatus (100) of claim 1, wherein a wire (311) connected to a negative electrode of a first battery cell among the predetermined number of battery cells is connected to a ground terminal of the operating device, and a wire (314) connected to a positive electrode of a last battery cell among the predetermined number of battery cells is connected to an operating voltage supply terminal of the operating device.

5. The battery apparatus of claim 1, wherein the plurality of battery cells of the second battery pack (120, 210, 310) is grouped into a plurality of battery cell groups, and each of the plurality of battery cell groups includes battery cells corresponding to the predetermined number, and
wherein the battery management system (130) is configured to select the battery cell group from among the plurality of battery cell groups.

6. The battery apparatus of claim 5, wherein the battery management system (130) is configured to alternately select one battery cell group from among the plurality of battery cell groups at a predetermined time interval.

7. The battery apparatus (100) of claim 5, wherein the battery management system (130) further includes a switching circuit (322) configured to select the plurality of battery cell groups.

8. The battery apparatus (100) of claim 7, wherein the plurality of battery cell groups includes a first battery cell group and a second battery cell group,
wherein the switching circuit (322) is configured to, in response to selecting the first battery cell group, connect a first wire (311) connected to a negative electrode of a first battery cell among the predetermined number of battery cells in the first battery cell group to a ground terminal of the operating device, and connect a second wire (312) connected to a positive electrode of a last battery cell among the predetermined number of battery cells in the first battery cell group to an operating voltage supply terminal of the operating device, and
wherein the switching circuit (322) is configured to, in response to selecting the second battery cell group, connect a third wire (313) connected to a negative electrode of a first battery cell among the predetermined number of battery cells in the second battery cell group to the ground terminal, and connect a fourth wire (314) connected to a positive electrode of a last battery cell among the predetermined number of battery cells in the second battery cell group to the operating voltage supply terminal.

9. The battery apparatus (100) of claim 8, wherein the switching circuit (322) includes:
a first switch (S1) connected between the first wire (311) and the ground terminal;
a second switch (S2) connected between the second wire (312) and the operating voltage supply terminal;
a third switch (S5) connected between the third wire (313) and the ground terminal; and
a fourth switch (S6) connected between the fourth wire (314) and the operating voltage supply terminal, and
wherein the battery management system (130) is configured to select the first battery cell group by turning on the first switch (S1) and the second switch (S2), and select the second battery cell group by turning on the third switch (S5) and the fourth switch (S6).

10. The battery apparatus (100) of claim 1, wherein the operating device includes a processor.

11. A method of supplying a voltage in a battery apparatus (100) including a first battery pack (110) configured to supply a first voltage to a large-capacity load of an external apparatus configured to be connected to the battery apparatus (100), a second battery pack (120, 210, 310) configured to supply a second voltage lower than the first voltage to a low-capacity load of the external apparatus, and a battery management system (130) configured to manage the first battery pack (110), the method comprising:
selecting (S610) a first battery cell group including a predetermined number of battery cells from among a plurality of battery cells included in the second battery pack (120, 210, 310); and
supplying (S620) an operating voltage to an operating device of the battery management system (130) through the first battery cell group.

12. The method of claim 11, wherein only a voltage of the second battery pack (120, 210, 310) is provided as the operating voltage.

13. The method of claim 11, further comprising:
selecting a second battery cell group including the predetermined number of other battery cells from among the plurality of battery cells in response to a predetermined time elapsing after selecting the first battery cell group; and
supplying the operating voltage to the operating device of the battery management system through the second battery cell group.

14. The method of claim 11, wherein the operating voltage corresponds to a sum of voltages of the predetermined number of battery cells.

## Patentansprüche

1. Batterievorrichtung (100), umfassend:
einen ersten Batteriepack (110), welcher dazu eingerichtet ist, eine erste Spannung zu einer Last mit großer Kapazität einer externen Vorrichtung bereitzustellen,
welche dazu eingerichtet ist, mit der Batterievorrichtung (100) verbunden zu sein; ein Batterie-Verwaltungssystem (130), welches dazu eingerichtet ist, den ersten Batteriepack (110) zu verwalten; und
einen zweiten Batteriepack (120, 210, 310), welcher dazu eingerichtet ist, eine zweite Spannung, welche niedriger als die erste Spannung ist, zu einer Last mit niedriger Kapazität der externen Vorrichtung bereitzustellen, und eine Mehrzahl von Batteriezellen umfasst,
wobei das Batterie-Verwaltungssystem (130) dazu eingerichtet ist, eine Batteriezellen-Gruppe, welche eine vorbestimmte Anzahl von Batteriezellen umfasst, aus der Mehrzahl von Batteriezellen des zweiten Batteriepacks (120, 210, 310) auszuwählen, und
wobei die ausgewählte Batteriezellen-Gruppe eine Betriebsspannung zu einer Betriebsvorrichtung des Batterie-Verwaltungssystems liefert.

2. Batterievorrichtung (100) nach Anspruch 1, wobei lediglich eine Spannung des zweiten Batteriepacks (120, 210, 310) als die Betriebsspannung bereitgestellt wird.

3. Batterievorrichtung (100) nach Anspruch 1, wobei die Betriebsspannung einer Summe von Spannungen der vorbestimmten Anzahl von Batteriezellen entspricht.

4. Batterievorrichtung (100) nach Anspruch 1, wobei ein Draht (311), welcher mit einer negativen Elektrode einer ersten Batteriezelle aus der vorbestimmten Anzahl von Batteriezellen verbunden ist, mit einem Erdungsanschluss der Betriebsvorrichtung verbunden ist, und ein Draht (314), welcher mit einer positiven Elektrode einer letzten Batteriezelle aus der vorbestimmten Anzahl von Batteriezellen verbunden ist, mit einem Betriebsspannung-Lieferanschluss der Betriebsvorrichtung verbunden ist.

5. Batterievorrichtung nach Anspruch 1, wobei die Mehrzahl von Batteriezellen des zweiten Batteriepacks (120, 210, 310) in eine Mehrzahl von Batteriezellen-Gruppen gruppiert ist und jede aus der Mehrzahl von Batteriezellen-Gruppen Batteriezellen umfasst, welche der vorbestimmten Anzahl entsprechen, und
wobei das Batterie-Verwaltungssystem (130) dazu eingerichtet ist, die Batteriezellen-Gruppe aus der Mehrzahl von Batteriezellen-Gruppen auszuwählen.

6. Batterievorrichtung nach Anspruch 5, wobei das Batterie-Verwaltungssystem (130) dazu eingerichtet ist, abwechselnd eine Batteriezellen-Gruppe aus der Mehrzahl von Batteriezellen-Gruppen bei einem vorbestimmten Zeitintervall auszuwählen.

7. Batterievorrichtung (100) nach Anspruch 5, wobei das Batterie-Verwaltungssystem (130) ferner einen Schalterschaltung (322) umfasst, welche dazu eingerichtet ist, die Mehrzahl von Batteriezellen-Gruppen auszuwählen.

8. Batterievorrichtung (100) nach Anspruch 7, wobei die Mehrzahl von Batteriezellen-Gruppen eine erste Batteriezellen-Gruppe und eine zweite Batteriezellen-Gruppe umfasst,
wobei die Schalterschaltung (322) dazu eingerichtet ist, in Reaktion auf ein Auswählen der ersten Batteriezellen-Gruppe einen ersten Draht (311), welcher mit einer negativen Elektrode einer ersten Batteriezelle aus der vorbestimmten Anzahl von Batteriezellen in der ersten Batteriezellen-Gruppe verbunden ist, mit einem Erdungsanschluss der Betriebsvorrichtung zu verbinden, und einen zweiten Draht (312), welcher mit einer positiven Elektrode einer letzten Batteriezelle aus der vorbestimmten Anzahl von Batteriezellen in der ersten Batteriezellen-Gruppe verbunden ist, mit einem Betriebsspannung-Lieferanschluss der Betriebsvorrichtung zu verbinden, und
wobei die Schalterschaltung (322) dazu eingerichtet ist, in Reaktion auf ein Auswählen der zweiten Batteriezellen-Gruppe einen dritten Draht (313), welcher mit einer negativen Elektrode einer ersten Batteriezelle aus der vorbestimmten Anzahl von Batteriezellen in der zweiten Batteriezellen-Gruppe verbunden ist, mit dem Erdungsanschluss zu verbinden, und einen vierten Draht (314), welcher mit einer positiven Elektrode einer letzten Batteriezelle aus der vorbestimmten Anzahl von Batteriezellen in der zweiten Batteriezellen-Gruppe verbunden ist, mit dem Betriebsspannung-Lieferanschluss zu verbinden.

9. Batterievorrichtung (100) nach Anspruch 8, wobei die Schalterschaltung (322) umfasst:
einen ersten Schalter (S1), welcher zwischen dem ersten Draht (311) und dem Erdungsanschluss verbunden ist;
einen zweiten Schalter (S2), welcher zwischen dem zweiten Draht (312) und dem Betriebsspannung-Lieferanschluss verbunden ist;
einen dritten Schalter (S5), welcher zwischen dem dritten Draht (313) und dem Erdungsanschluss verbunden ist; und
einen vierten Schalter (S6), welcher zwischen dem vierten Draht (314) und dem Betriebsspannung-Lieferanschluss verbunden ist, und
wobei das Batterie-Verwaltungssystem (130) dazu eingerichtet ist, die erste Batteriezellen-Gruppe auszuwählen, indem der erste Schalter (S1) und der zweite Schalter (S2) eingeschaltet werden, und die zweite Batteriezellen-Gruppe auszuwählen, indem der dritte Schalter (S5) und der vierte Schalter (S6) eingeschaltet werden.

10. Batterievorrichtung (100) nach Anspruch 1, wobei die Betriebsvorrichtung einen Prozessor umfasst.

11. Verfahren zum Liefern einer Spannung in einer Batterievorrichtung (100), welche einen ersten Batteriepack (110), welcher dazu eingerichtet ist, eine erste Spannung zu einer Last mit großer Kapazität einer externen Vorrichtung zu liefern, welche dazu eingerichtet ist, mit der Batterievorrichtung (100) verbunden zu sein, einen zweiten Batteriepack (120, 210, 310), welcher dazu eingerichtet ist, eine zweite Spannung, welche niedriger als die erste Spannung ist, zu einer Last mit niedriger Kapazität der externen Vorrichtung zu liefern, und ein Batterie-Verwaltungssystem (130) umfasst, welches dazu eingerichtet ist, den ersten Batteriepack (110) zu verwalten, wobei das Verfahren umfasst:
Auswählen (S610) einer ersten Batteriezellen-Gruppe, welche eine vorbestimmte Anzahl von Batteriezellen umfasst, aus einer Mehrzahl von Batteriezellen, welche in dem zweiten Batteriepack (120, 210, 310) umfasst sind; und
Liefern (S620) einer Betriebsspannung zu einer Betriebsvorrichtung des Batterie-Verwaltungssystems (130) durch die erste Batteriezellen-Gruppe.

12. Verfahren nach Anspruch 11, wobei lediglich eine Spannung des zweiten Batteriepacks (120, 210, 310) als die Betriebsspannung bereitgestellt wird.

13. Verfahren nach Anspruch 11, ferner umfassend:
Auswählen einer zweiten Batteriezellen-Gruppe, welche die vorbestimmte Anzahl von anderen Batteriezellen umfasst, aus der Mehrzahl von Batteriezellen in Reaktion darauf, dass eine vorbestimmte Zeit nach einem Auswählen der ersten Batteriezellen-Gruppe verstreicht; und
Liefern der Betriebsspannung zu der Betriebsvorrichtung des Batterie-Verwaltungssystems durch die zweite Batteriezellen-Gruppe.

14. Verfahren nach Anspruch 11, wobei die Betriebsspannung einer Summe von Spannungen der vorbestimmten Anzahl von Batteriezellen entspricht.

## Revendications

1. Appareil de batterie (100), comprenant :
un premier bloc-batterie (110) configuré pour fournir une première tension à une charge de grande capacité d'un appareil externe configuré pour être connecté à l'appareil de batterie (100) ;
un système de gestion de batterie (130) configuré pour gérer le premier bloc-batterie (110) ; et
un deuxième bloc-batterie (120, 210, 310) configuré pour fournir une deuxième tension inférieure à la première tension à une charge de faible capacité de l'appareil externe, et comportant une pluralité de cellules de batterie,
dans lequel le système de gestion de batterie (130) est configuré pour sélectionner un groupe de cellules de batterie comportant un nombre prédéterminé de cellules de batterie parmi la pluralité de cellules de batterie du deuxième bloc-batterie (120, 210, 310), et
dans lequel le groupe de cellules de batterie sélectionné fournit une tension de fonctionnement à un dispositif de commande du système de gestion de batterie.

2. Appareil de batterie (100) selon la revendication 1, dans lequel seule une tension du deuxième bloc-batterie (120, 210, 310) est fournie en tant que tension de fonctionnement.

3. Appareil de batterie (100) selon la revendication 1, dans lequel la tension de fonctionnement correspond à une somme de tensions du nombre prédéterminé de cellules de batterie.

4. Appareil de batterie (100) selon la revendication 1, dans lequel un fil (311) connecté à une électrode négative d'une première cellule de batterie parmi le nombre prédéterminé de cellules de batterie est connecté à une borne de terre du dispositif de commande, et un fil (314) connecté à une électrode positive d'une dernière cellule de batterie parmi le nombre prédéterminé de cellules de batterie est connecté à une borne d'alimentation en tension de fonctionnement du dispositif de commande.

5. Appareil de batterie selon la revendication 1, dans lequel la pluralité de cellules de batterie du deuxième bloc-batterie (120, 210, 310) est regroupée dans une pluralité de groupes de cellules de batterie, et chacun de la pluralité de groupes de cellules de batterie comporte des cellules de batterie correspondant au nombre prédéterminé, et dans lequel le système de gestion de batterie (130) est configuré pour sélectionner le groupe de cellules de batterie parmi la pluralité de groupes de cellules de batterie.

6. Appareil de batterie selon la revendication 5, dans lequel le système de gestion de batterie (130) est configuré pour sélectionner alternativement un groupe de cellules de batterie parmi la pluralité de groupes de cellules de batterie à un intervalle de temps prédéterminé.

7. Appareil de batterie (100) selon la revendication 5, dans lequel le système de gestion de batterie (130) comporte en outre un circuit de commutation (322) configuré pour sélectionner la pluralité de groupes de cellules de batterie.

8. Appareil de batterie (100) selon la revendication 7, dans lequel la pluralité de groupes de cellules de batterie comporte un premier groupe de cellules de batterie et un deuxième groupe de cellules de batterie,
dans lequel le circuit de commutation (322) est configuré pour, en réponse à la sélection du premier groupe de cellules de batterie, connecter un premier fil (311) connecté à une électrode négative d'une première cellule de batterie parmi le nombre prédéterminé de cellules de batterie dans le premier groupe de cellules de batterie à une borne de terre du dispositif de commande, et connecter un deuxième fil (312) connecté à une électrode positive d'une dernière cellule de batterie parmi le nombre prédéterminé de cellules de batterie dans le premier groupe de cellules de batterie à une borne d'alimentation en tension de fonctionnement du dispositif de commande, et dans lequel le circuit de commutation (322) est configuré pour, en réponse à la sélection du deuxième groupe de cellules de batterie, connecter un troisième fil (313) connecté à une électrode négative d'une première cellule de batterie parmi le nombre prédéterminé de cellules de batterie dans le deuxième groupe de cellules de batterie à la borne de terre, et connecter un quatrième fil (314) connecté à une électrode positive d'une dernière cellule de batterie parmi le nombre prédéterminé de cellules de batterie dans le deuxième groupe de cellules de batterie à la borne d'alimentation en tension de fonctionnement.

9. Appareil de batterie (100) selon la revendication 8, dans lequel le circuit de commutation (322) comporte :
un premier commutateur (S1) connecté entre le premier fil (311) et la borne de terre ;
un deuxième commutateur (S2) connecté entre le deuxième fil (312) et la borne d'alimentation en tension de fonctionnement ;
un troisième commutateur (S5) connecté entre le troisième fil (313) et la borne de terre ; et
un quatrième commutateur (S6) connecté entre le quatrième fil (314) et la borne d'alimentation en tension de fonctionnement, et
dans lequel le système de gestion de batterie (130) est configuré pour sélectionner le premier groupe de cellules de batterie en activant le premier commutateur (S1) et le deuxième commutateur (S2), et sélectionner le deuxième groupe de cellules de batterie en activant le troisième commutateur (S5) et le quatrième commutateur (S6).

10. Appareil de batterie (100) selon la revendication 1, dans lequel le dispositif de commande comporte un processeur.

11. Procédé de fourniture d'une tension dans un appareil de batterie (100) comportant un premier bloc-batterie (110) configuré pour fournir une première tension à une charge de grande capacité d'un appareil externe configuré pour être connecté à l'appareil de batterie (100), un deuxième bloc-batterie (120, 210, 310) configuré pour fournir une deuxième tension inférieure à la première tension à une charge de faible capacité de l'appareil externe, et un système de gestion de batterie (130) configuré pour gérer le premier bloc-batterie (110), le procédé comprenant :
la sélection (S610) d'un premier groupe de cellules de batterie comportant un nombre prédéterminé de cellules de batterie parmi une pluralité de cellules de batterie incluses dans le deuxième bloc-batterie (120, 210, 310) ; et
la fourniture (S620) d'une tension de fonctionnement à un dispositif de commande du système de gestion de batterie (130) par le biais du premier groupe de cellules de batterie.

12. Procédé selon la revendication 11, dans lequel seule une tension du deuxième bloc-batterie (120, 210, 310) est fournie en tant que tension de fonctionnement.

13. Procédé selon la revendication 11, comprenant en outre :
la sélection d'un deuxième groupe de cellules de batterie comportant le nombre prédéterminé d'autres cellules de batterie parmi la pluralité de cellules de batterie en réponse à l'écoulement d'un temps prédéterminé après la sélection du premier groupe de cellules de batterie ; et
la fourniture de la tension de fonctionnement au dispositif de commande du système de gestion de batterie par le biais du deuxième groupe de cellules de batterie.

14. Procédé selon la revendication 11, dans lequel la tension de fonctionnement correspond à une somme de tensions du nombre prédéterminé de cellules de batterie.
